# EUROPEAN PATENT SPECIFICATION

(11) **EP 1 641 346 B1**
(45) Date of publication and mention of the grant of the patent: **03.06.2009**
(21) Application number: 04726117.7
(22) Date of filing: 07.04.2004
(51) Int. Cl.: A23G 1/00

(54) **CONFECTIONERY PRODUCT**
KONFEKTPRODUKT
PRODUIT DE CONFISERIE

(30) Priority: 30.06.2003 GB 0315268
(43) Date of publication of application: 05.04.2006
(73) Proprietor: Nestec S.A., 1800 Vevey (CH)
(72) Inventor: MOR, Aline, Lucena, UK-YORK YO31 8JH (GB); FIAUX, Thierry D., UK-YO23-1 JD York (GB)
(74) Representative: Rauline, Mathilde
(86) International application number: PCT/EP2004/003709
(87) International publication number: WO 2005/002352

(56) References cited:
- EP-A- 0 098 065
- EP-A- 0 898 898
- WO-A-02/13618
- WO-A-99/31996
- DE-C- 4 126 683
- DE-U- 29 607 578
- GB-A- 459 582

## Description

### Field of the invention

The present invention refers to a coated confectionery product comprising an edible container filled with a fat-based macro-aerated filling with bubbles of gas visible to the naked eye.

### Background of the invention

Products comprising two wafer shells and a confectionery filling are known. For example, EP 0 086 319 to Ferrero describes a confectionery product having a filling contained by two concave wafer half-shells together forming a shell with a closed cavity, and the confectionery product is coated with chocolate. The filling has a creamy consistency at ambient temperature, a water content of not more than 2% by weight, and is in direct contact with the halfshells.

There are also chocolate covered expanded confectionery products such as expanded cinder toffee or Mars Maltesers®. These may use an expanding agent such as sodium bicarbonate which is caused to expand by heating as in WO 97/34503 or they may use the expansion of moisture in the starting formulation by heating under vacuum as in WO 02/37979. These products are generally crisp or crunchy in texture and are not generally combined with wafer.

EP 0 980 651 to Franz Zentis GmbH describes a bite-sized confectionery product consisting of two pieces of wafer brought to enclose a defined space. The space contains a filling in direct contact with the wafers, including 30 to 50 % fat by weight and not more than 3% by weight of water. The wafers have a fat or chocolate coating. The filling is introduced to the defined space together with a charge of inert gas, and the amount of gas in the filling is comprised between 5 and 25% vol.
The gas used is nitrogen which produces a micro-aeration, hardly visible to the naked eye. The fact that nitrogen produces micro-aeration is well known. For example, in his presentation to Schoko-technik 2002 in Cologne, Volker Bäumer from the equipment manufacturer Sollich explained how macro-aeration (bubble size 0.5-2mm) uses nitrous oxide or carbon dioxide gas whereas micro-aeration (bubble size below 50 micron) uses pure air or nitrogen. In EP 0 980 651 the nitrogen is introduced in the filling for three main reasons: first it helps sticking the wafers together due to an increase in viscosity, second it helps reducing fat migration, and third it improves texture when eating the product.
EP 0 898 898 discloses a process for making an edible package for liquids containing foodstuff. WO 99/31996 discloses a food product consisting of a fan-shaped wafer and a food core preferably made from ice cream. WO 02113618 discloses a honeycombed chocolate-based product arranged between two biscuits. However, there is a need for new and attractive confectionery products.

### Summary of the Invention

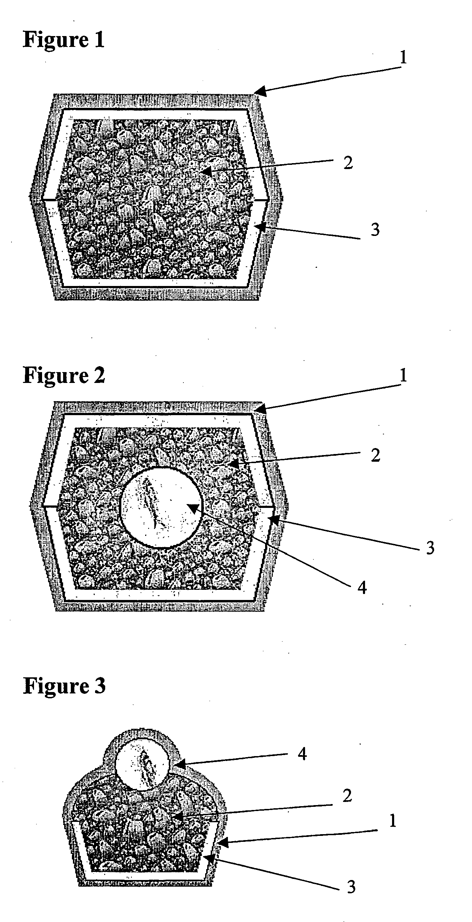

Accordingly, the confectionery product according to the invention is a coated product comprising an edible container filled with a fat-based macro-aerated filling which, when deposited, can keep and sustain its shape until it is cooled. Figures
Figure 1 represents the cross section of an indulgent wafer product with macro-aerated cream container between two wafer cups.
Figure 2 represents the cross section of an indulgent wafer product with macro-aerated cream contained between two wafer cups together with a whole nut.
Figure 3 is the cross section of an indulgent wafer product with a defined shape, wherein the wafer does not totally enclose the filling.

### Detailed Description of the Invention

In the context of the present specification, the term "defined shape" is intended to mean that the aerated filling, when deposited, can keep and sustain its shape until it is cooled. In other words; at a depositing temperature of 27°C and for at least two minutes, said filling does not flow over the rims of the container, and the aerated filling does not collapse.

The term "bubble visible to the naked eye" is intended to mean that the bubbles are round or oval volumes free of fat-based filling having a diameter at least equal to 0.5 rum, preferably at least equal to 1 mm In a most preferred embodiment, bubbles have a diameter comprised between 0.5 and 5 mm; preferably between 0.5 and 3 mm. Bubbles resulting from a micro-aeration process are not covered by the present definition. Fillings having gas cavities of non-rounded shapes are not either covered by the present definition.
In the following description, all percentages are given by weight, unless differently specified.
The confectionery product of the invention can consist of a lower part having its shape defined by the shape of the container, and an upper part having a dome shape which can be slightly flattened on top.

The edible container (3) shaping the lower part of the confectionery product can be made from sugar, nougat, biscuit or any other suitable edible material, but is preferably made from wafer.

The wafer can be any type of wafer, but is preferably a non-sugar wafer. The wafer used has a thickness comprised between 0.5 and 3 mm, preferably between 1 and 2 mm. In the most preferred embodiment, the wafer container is a wafer cup, for example having a lower diameter comprised between 15 and 40 mm more preferably between 15 and 25 mm and an upper diameter comprised between 17 and 50 mm, more preferably between 25 and 35 mm.

The wafer composition is usual. The batter can comprise between 30 and 50% of flour, between 50 and 70% of water and between 0.04 and 0.8% leavening agents together with other typical wafer components such as salt.
The batter is poured onto a cavity wafer plate and baked at a temperature between 150 °C and 170 °C for between 120 and 240 seconds. The shape of the wafer is defined by the cavity wafer plates with the individual containers being cut out of the finished wafer sheet.

The container (3) is preferably shaped as a cup or a truncated cone, but can also be shaped as a cylinder, a tube with an oval cross section, a tube with a square or rectangular cross section, a truncated pyramid, or a flower, among others. However, preferred container shapes have an upper section greater than the lower section.

The filling (2) of the present invention is an aerated fat-based filling. Preferably, the fat-based filling comprises sugar, cocoa butter and/or cocoa butter equivalent and/or cocoa butter replacer, cocoa mass, vegetable oil and full cream milk powder.

In a preferred embodiment, the filling (2) is an aerated form of Gianduia, the traditional Italian confection containing cocoa, sugar and hazelnuts. It may contain sugar, hazelnuts, cocoa mass, cocoa butter and full cream milk powder, all these ingredients combined, refined and conched as for standard chocolate manufacture. The advantage of including hazelnuts is that the hazelnut oil softens the filling and provides the hazelnut taste popular with consumers.

The filling can further comprise emulsifiers that have a beneficial effect on aeration.

The aerated filling of the invention is aerated to a density comprised between 0.5 and 0.9 g/cm³, preferably between 0.6 and 0.8 g/cm³, and in the most preferred embodiment the aeration density is 0.7 g/cm³. The density is dependent on the pressure of gas dissolved in the filling. The aeration is macro-aeration, which can be achieved using carbon dioxide or nitrous oxide.

Furthermore, the fat components of the fat-based aerated filling provide a soft filling, melting rapidly in the mouth. For example, extracted fat from the preferred filling of the invention has a a solid fat content of 14% at 25C and 33% at 20°C which shows that the texture of the fat at room temperature is soft. The absence of solid fat at 30°C indicates that the filling will melt rapidly in the mouth with no waxy residue. So, the low solid fat content provides an indulgent soft creamy mouthfeel, which, combined with the other aspects of the invention, provides a unique eating experience.
To measure the solid fat contents, the fat is extracted from the cream, subjected to a thermal pre-treatment and then the solid fat content is measured by Nuclear Magnetic Resonance. This process is explained in detail in Example 2.

The aerated fat based material can be deposited in the edible container by the following process. A suitable machine that can aerate the fat based material is a Haas®-Mondomixer. Liquid fat based material at the required temperature is fed by pump to a whipping machine. Carbon dioxide gas or another gas suitable for macro-aeration is introduced into the liquid fat based material under pressure (4-8bar) and at the required flow rate to give the preferred density. This mixture passes with the aid of the feed pump to the whipping head, which has both static and rotating pins where the gas is mixed with the fat based mass. The speed of the whipping head rotor can be varied to give the required level of bubble dispersion. The head and pipe work is usually water jacketed to keep the mass cool and aid whipping. Water temperatures in the range of 15°C - 32°C are required depending on mass throughput and whipping head speed. After whipping, the mass continues under pressure to the point of deposit. The Haas®-Mondomixer is a continuous whipping machine, so to maintain a continuous mass throughput and pressure, a pressure regulator device is situated on a spur, which allows product to purge to atmosphere. This device is set to maintain a suitable pressure in the whipping head, preferably in the range (3-9 bar). Mass not deposited passes out to atmospheric pressure via this device, thus keeping a constant pressure in the system.

A suitable depositing device would be a pressurized piston depositor, fed from the pressurized part of the Haas®-Mondomixer circuit after the whipping head. An example of such a device would be the apparatus for depositing a food product described in EP 1 064 852 to Nestlé, appropriately modified to handle aerated fat based material.

One of the major advantages of the present invention lies in the fact that the edible cup is filled with an aerated fat-based material such that the filling shape is created as the foam expands after depositing. Depositing aerated material at a controlled pressure and constant volume enables the aerated fat-based material to be accurately dosed into the edible cups at speed. This accuracy enables the aerated fat-based material deposit to achieve a high proportion of the aerated fat-based material above the rim of the edible cup. With less good control there is a danger that either an increase in dissolved gas pressure or a variation in deposit volume will cause the aerated fat-based material to overflow the edges of the container. Dosing an aerated fat-based material under pressure and allowing it to expand to fill the edible container can lead to faster dosing speeds as the edible container can move away from the depositor to allow another edible container to be dosed before the final shape has been achieved in the original container. In contrast, when dosing already expanded material, the container needs to remain under the depositor until the filling process ends and the final shape has been achieved. A further advantage of depositing the aerated fat-based material under pressure and allowing it to expand to fill the edible container is that the depositor nozzle does not have to be so accurately centred in the edible cup. The aerated fat-based material flows across the bottom of the container and then starts to expand, guided by the walls of the container to create a well-centred shape. In contrast, if aerated fat-based material is deposited already expanded and at atmospheric pressure, any deviation of the nozzle from the dead centre point of the container will tend to cause the aerated fat-based material to fill the container lopsidedly and hence increase the chance of overflowing the container. In a preferred embodiment of the invention, the aerated fat-based material above the rim of the edible cup comprises from 20 to 50% of the total aerated material.

In a very preferred embodiment of the invention, the ratio of the aerated material above the rim of the edible container comprises approximately 30% of the total aerated material.

It is surprising that an aerated fat-based material can stand at these proportions without being moulded by anything, especially when taken into consideration that the aerated material is deposited when still liquid at around 27°C.
Indeed, in usual fat-based aerated products, the fat-based aerated material is poured into a mould and is contained within the limits defined by the upper rims of said mould. This is the case in aerated chocolate tablets or aerated chocolate bars, for example.
Products such as the ones described in EP 0 980 651 also contain aerated fat-based fillings, but here again the aerated material stays in the limits defined by the mould (consisting, in the present case, of a pyramidal wafer).

In usual fat-based macro-aerated products, the fat-based aerated material is poured into a mould. This is the case in filled aerated chocolate tablets or aerated chocolate bars such as Nestlé's Aero®. Exact dosing of the macro-aerated fat based filling in such products is not critical, as the filling is levelled to the height of the mould by scraper blades. The action of the scraper blades on the macro-aerated fat based filling causes it to collapse slightly as the bubbles near the top are ruptured. The chocolate tablet or bar is finished by backing off with a layer of chocolate which fills the void left by any collapse or any under filling..

Products such as the ones described in EP 0 980 651 contain micro-aerated fat-based fillings, and as described in the patent, the filling is levelled using scraper blades. This is possible for micro-aerated fat-based fillings as rupture of the microscopic air bubbles does not lead to a significant collapse. This would not be possible with macro-aerated fat-based fillings. The void left by the scraper blades or by under filling would prevent the two wafer pieces being joined together using the filling as an adhesive material. If discrete deposits of molten chocolate were applied to the wafer pieces to join them as described in EP 0 086 319 the final product would have a space in the centre which is not desirable. If the filling was backed off with chocolate, the soft texture of the filling within the wafer would be compromised. Accordingly, the accurate depositing of aerated fat-based material at a controlled pressure and constant volume described above also permits the production of macro-aerated wafer product where the filling is enclosed within one or more wafer shells without an air gap and without the need for fat based material other than macro-aerated fat-based filling within the space enclosed by the wafer or wafers. The accurate depositing of aerated fat-based material at a controlled pressure and constant volume can allow for the inclusion of an edible item such as a nut by under filling by essentially the volume of the included edible item. The filled wafer shells can be coated in a similar way to the indulgent wafer product with a defined shape where the wafer does not totally enclose the cream.

The preferred overall process for the indulgent wafer product with macro-aerated cream contained between two wafer cups (3) can be described as follows: fat-based filling material (2) and coating material (1) are manufactured separately. Shaped wafer sheets are baked and cooled. Tempered fat-based material is placed in an aerating device, gas is added under pressure and then the aerated fat-based material is accurately dosed into the cups at around 27°C so as to essentially fill the cups. Two wafer sheets are brought together so that pairs of cups enclose the macro-aerated fat-based filling. The filled wafer sheets are passed to a cooling tunnel where they are cooled for at least 20 minutes. The pairs of wafer cups are cut out of the sheet, and then passed through two chocolate enrobers to coat the product in chocolate. If an edible item such as a whole nut (4) is required within the wafer cup, the accurate deposit is reduced to essentially compensate for the volume of the edible item and maintain an exactly filled wafer cup.

In an embodiment of the invention, the fat-based aerated material can also comprise pieces of or entire flakes, hazelnuts (4), walnuts, coconuts, almonds, macadamia nuts, peanuts, cashew nuts, pistachio nuts, chestnuts, chocolate, wafers, sugar or fruits. In another embodiment of the invention, the fat-based aerated filling can be topped with and/or surrounded by pieces of or entire flakes, hazelnuts (4), walnuts, coconuts, almonds, macadamia nuts, peanuts, cashew nuts, pistachio nuts, chestnuts, chocolate, wafers, sugar or fruits; it can also be topped or surrounded with edible figures in shapes such as numbers, alphabetic letters, cartoon characters, cars, buses, animals, dinosaurs, stars, trees, hearts or the like. Preferably, a whole hazelnut is placed on top of the filling after it has been cooled at around 16°C, and the assembly is then enrobed in chocolate. Optionally, the aerated filling in the edible cup can be enrobed with chocolate before the nut is placed on top, and then a further enrobing of chocolate can be applied.

Defined shapes such as the defined dome shape of the present invention provide visual attraction and product identity for indulgent confectionery products. A combination of soft cream (such as a fat based filling) and crisp wafer provides a pleasant textural contrast.

The indulgent texture of a soft cream is further enhanced by aerating it. Products exist where the defined shape is achieved by combining two wafer half shells to totally enclose a soft fat based cream (EP 0 086 319 already mentioned) and EP 0 980 651 (also already mentioned) describe a product where the enclosed cream is micro-aerated. However, on eating, the perception of the indulgent soft filling is diminished by both the upper and lower sets of teeth having to bite through wafer before reaching the cream.

The product according to one aspect of the invention is an indulgent wafer product with a defined shape where the wafer does not totally enclose the cream allowing a contribution of the initial bite to come from one set of teeth biting through soft cream while the other set of teeth crunch through wafer

On the other hand, wafer products are known where an aerated fat based filling forms a slight dome above the rim of the wafer. The disadvantage of these is that the small aerated dome provides a minor part of the overall product shape and is too small to contribute to a contrast in texture experienced by the top and bottom sets of teeth biting into the product. The ratio of aerated material above the rim of the wafer cup is limited because it has conventionally not been possible to dose aerated material accurately enough. If too little aerated material is dosed the desired shape will not be achieved and if too much aerated material is dosed the aerated material will over-flow the wafer cup.
Conventionally it has only been possible to produce efficiently products where a small percentage of the aerated material stands above the wafer cup leaving a margin of error for overdosing without the filling over-flowing and, as the aerated dome is only a minor contribution to the product shape, under filling is less noticeable.

The product of the invention is preferably coated. Suitable coatings (1) include dark, milk or white chocolate, compound or couverture. The coating material may also include products derived from sugar with or without milk derived components, and fat and solids from vegetable or cocoa sources in differing proportions having a moisture content less than 10%, more usually less than 6% by weight. The coating material may include chocolate substitutes containing direct cocoa butter replacements, stearines, coconut oil, palm oil, butter or any mixture thereof; nut pastes such as peanut butter and fat; praline; confectionery's coatings also known as compounds or couvertures, used for covering ice cream or cakes usually comprising chocolate or analogues with cocoa butter replaced by a cheaper non-tempering fat; or Caramac® sold by Nestlé comprising non-cocoa butter fats, sugar and milk. Traditional chocolate normally contains from 28 to 35 wt. % fat and in this invention, fat based confectionery material may, if desired, contain normal amounts of fat or less than the normal amount of fat present in chocolate, e.g., it may contain from 16 to 35 wt. % total fat and preferably 20 to 30 wt. % total fat. Fats can be chosen among traditional chocolate fats such as cocoa butter and/or vegetable fats to provide product compositions with amounts of low melting triglycerides and ratios of triglycerides which are typical for chocolate or chocolate-like substances. Preferably the coating is a semi dark chocolate.

The coating preferably comprises two layers of the afore-mentioned coating material applied in a typical chocolate double enrobing process.

The preferred overall process for the indulgent wafer product with a defined shape where the wafer does not totally enclose the cream can be described as follows : fat-based filling material and coating material are manufactured separately. Shaped wafer sheets are baked, cooled and the individual wafer cups cut from the sheet. Tempered fat-based material is placed in an aerating device, gas is added under pressure and then the macro-aerated fat-based material is dosed into the cups at around 27°C. The macro-aerated fat-based material expands in the cups to form a dome which extends above the rims of the wafer cups. The filled wafer cups are passed to a cooling tunnel where they are cooled for at least 20 minutes. A nut or other edible item is placed on top of the dome and then the complete assembly is passed through two chocolate enrobers to coat the product in chocolate.

### Examples

The following examples are illustrative of some of the products and methods of making the same falling within the scope of the present invention. They are not to be considered in any way limitative of the invention. Changes and modifications can be made with respect to the invention. That is, the skilled person will recognise many variations in these examples to cover a wide range of formulas, ingredients, processing, and mixtures to rationally adjust the naturally occurring levels of the compounds of the invention for a variety of applications.

### Example 1 : composition of the fat-based filling

| | |
|---|---|
| Sugar | 45% |
| Hazelnut Paste | 30% |
| CBE (containing emulsifier) | 10% |
| Skimmed Milk Powder | 5% |
| Cocoa Butter | 5% |
| Cocoa Powder | 5% |

This is refined and conched as for chocolate manufacture. The filling is tempered and aerated to a density of 0.7 g/cm³ with CO₂.

### Example 2: determination of the fat solid content of the filling

Fat is extracted from the filling cream of example 1. The filling cream is mixed with cold petroleum spirit them centrifuged and filtered to remove all the sediment, then the petroleum spirit is removed using a rotary evaporator. The extracted fat is subjected to a thermal pre-treatment of 60mins at 80°C, 30mins at 60°C, 90mins at 0°C, 40Hrs at 26°C and then 90mins at 0°C. The solid fat is then measured using a Bruker NM2 120 NMR at the following temperatures; 0°C, 5°C, 10°C, 15°C, 20°C, 25°C, 30°C, 35°C and 40°C, being allowed to stabilize at each temperature for 30min before measurement.

The following results are obtained:

| | |
|---|---|
| Solid Fat Content at 0 deg C | 57.0% |
| Solid Fat Content at 5 deg C | 56.0% |
| Solid Fat Content at 10 deg C | 51% |
| Solid Fat Content at 15 deg C | 43% |
| Solid Fat Content at 20 deg C | 33% |
| Solid Fat Content at 25 deg C | 14% |
| Solid Fat Content at 30 deg C | 0% |
| Solid Fat Content at 35 deg C | 0% |
| Solid Fat Content at 40 deg C | 0% |

### Example 3: Bubble Size Determination

The filling as prepared in Example 1 is deposited into wafer cups and allowed to cool. A very sharp blade is used to cut horizontally across the filling. The filling is placed under a low-powered magnifying camera with a measuring graticule at the same level. An image is taken and the bubbles are identified and their diameters measured. The process is repeated for a vertical cut. The bubble diameters ranged between 0.5mm and 5mm. As the knife may cut through any part of the bubble, not necessarily the widest point, this indicates that the majority of bubbles were approximately 2mm in diameter.

## Claims

1. A confectionery product having a defined shape comprising
a) an edible container (3),
b) a macro-aerated fat-based filling (2) which, when deposited, can keep and sustain its shape until it is cooled, and
c) a coating (1).

2. Confectionery product according to claim 1 wherein the edible container is a wafer container.

3. Confectionery product according to claim 1 or claim 2 wherein the filling is aerated to a density between 0.5 and 0.9 g/cm3 and the bubbles have a diameter of between 0.5 and 5 mm.

4. Confectionery product according to any of claims 1 to 3 wherein the ratio of the aerated material above the rim of the edible container comprises from 20 to 50% preferably 30% of the total aerated material.

5. Confectionery product according to any of claims 1 to 3 wherein the edible container encases the macro-aerated fat based material.

6. Confectionery product according to claim 5 wherein the edible container is in more than one part.

7. Confectionery product according to any of claims 1 to 6 wherein the filling further comprises pieces of or complete flakes, hazelnuts, walnuts, coconuts, Almonds, macadamia nuts, peanuts, cashew nuts, pistachio nuts, chestnuts, chocolate, wafers, sugar or fruits.

8. Confectionery product according to any of claims 1 to 7 wherein the product is a bitesized, two-bite sized or three-bite sized product.

9. Confectionery according to any of claims 1 to 8 wherein the coating is chocolate.

## Patentansprüche

1. Süßwarenprodukt mit einer definierten Form, das umfasst:
a) einen essbaren Behälter (3),
b) eine makrobelüftete Füllung (2), die, wenn sie abgeschieden wird, ihre Form behalten und selbst aufrechterhalten kann, bis sie abgekühlt ist, und
c) einen Überzug (1).

2. Süßwarenprodukt nach Anspruch 1, wobei der essbare Behälter ein Waffelbehälter ist.

3. Süßwarenprodukt nach Anspruch 1 oder Anspruch 2, wobei die Füllung bis zu einer Dichte zwischen 0,5 und 0,9 g/cm³ belüftet ist und die Blasen einen Durchmesser von zwischen 0,5 und 5 mm aufweisen.

4. Süßwarenprodukt nach irgendeinem der Ansprüche 1 bis 3, wobei die Relativmenge des belüfteten Materials über dem Rand des essbaren Behälters von 20 bis 50%, vorzugsweise 30%, des gesamten belüfteten Materials ausmacht.

5. Süßwarenprodukt nach irgendeinem der Anspräche 1 bis 3, wobei der essbare Behälter das makrobelüftete Material auf Fettbasis umhüllt.

6. Süßwarenprodukt nach Anspruch 5, wobei der essbare Behälter von mehr als einem Teil gebildet wird.

7. Süßwarenprodukt nach irgendeinem der Ansprüche 1 bis 6, wobei die Füllung außerdem Stücke von oder vollständige Flocken, Haselnüsse(n), Walnüsse(n), Kokosnüsse (n), Mandeln, Makadamia-Nüsse(n), Erdnüsse(n), Cashew-Nüsse(n), Pistazien-Nüsse(n), Kastanien, Schokolade, Waffeln, Zucker oder Früchte(n) aufweist.

8. Süßwarenprodukt nach irgendeinem der Absprüche 1 bis 7, wobei das Produkt ein Produkt einer Größe von einem Bissen, zwei nissen oder drei Bissen aufweist.

9. Süßware nach irgendeinem der Ansprüche 1 bis 8, wobei der überzug Schokolade ist.

## Revendications

1. Produit de confiserie ayant une forme définie, comprenant
a) un récipient comestible (3) ,
b) un fourrage macro-aéré à base de matière grasse (2) qui, une fois déposé, peut garder et maintenir sa forme jusqu'à ce qu'il soit refroidi, et
c) un enrobage (1).

2. Produit de confiserie suivant la revendication 1, dans lequel le récipient comestible est un récipient du type gaufrette.

3. Produit de confiserie suivant la revendication 1, ou la revendication 2, dans lequel le fourrage est aéré à une masse volumique comprise entre 0,5 et 0,9 g/cm³ et les bulles ont un diamètre de 0,5 à 5 mm.

4. Produit de confiserie suivant l'une quelconque des revendications 1 à 3, dans lequel à proportion de à substance aérée au-dessus du bord du récipient comestible représente 20 à 50 %, de préférence 30 %, de la substance aérée totale.

5. Produit de confiserie suivant l'une quelconque des revendications 1 à 3, dans lequel le récipient comestible renferme la substance macro-aérée à base de matière grasse.

6. Produit de confiserie suivant la revendication 5, dans lequel le récipient comestible est en plus d'une partie.

7. Produit de confiserie suivant l'une quelconque des revendications 1 à 6, dans lequel le fourrage comprend en outre des flocons, noisettes, noix, noix de coco, amandes, noix de macadamia, cacahuètes, noix de cajou, pistaches, châtaignes, chocolat, gaufrettes, sucres ou fruits en morceaux ou entiers.

8. produit de confiserie suivant l'une quelconque des revendications 1 à 7, le produit étant un produit de dimensions pour la consommation en une bouchée, de dimensions pour la consommation en deux bouchées ou de dimensions pour la consommation en trois bouchées.

9. Produit de confiserie suivant l'une quelconque des revendications 1 à 8, dans lequel l'enrobage est constitué de chocolat.
